# EUROPEAN PATENT APPLICATION

(11) **EP 1 396 784 A2**
(43) Date of publication of application: **10.03.2004**
(21) Application number: 03255542.7
(22) Date of filing: 05.09.2003
(51) Int. Cl.: G06F 3/12

(54) **Printing apparatus and method**

(30) Priority: 05.09.2002 KR 2002053625
(71) Applicant: SAMSUNG ELECTRONICS CO., LTD., Suwon-City, Kyungki-do (KR)
(72) Inventor: Kim, Jin-hyung, Paldal-gu, Suwon-city, Gyunggi-do (KR)
(74) Representative: Geary, Stuart Lloyd

(57) **Abstract**

An image forming apparatus that wirelessly transmits and receives data with an external apparatus, and has a wireless communication unit to receive image data transmitted from the external apparatus, demodulate the received image data, output the demodulated data, detect a wireless reception sensitivity of the image data, and output a reception sensitivity information corresponding to the a detection result. The apparatus also has an image forming unit varies a time-out value based on the reception sensitivity information, and stops the reception of a data from the external apparatus when during the transmission of the data from the external apparatus a period of non-reception of the data exceeds the time-out value.. According to the wireless image forming apparatus, the success rate of wireless printing is improved even when communication is severed for a while due to the increase of obstacles on a communication path.

## Description

The invention relates to a printing method and an image forming apparatus comprising wireless receiver means.

Conventional wireless printing systems generally comprise a terminal, such as a PC, with a wireless communication unit, a wireless image forming apparatus with a wireless communication unit, and an access point to relay data input and output into and from each of the wireless communication units.

The wireless image forming apparatus of the conventional printing system disconnects from a wireless connection when image data is not input from a device within a predetermined reference time. The reference time, which is the criteria for terminating a wireless connection, is also called a time-out value. The time-out value is generally set by an operator using a remote PC or a key input unit.

However, the set-up time-out value is not automatically varied in response to changes in communication status. Therefore, when the reception sensitivity of the wireless image forming apparatus is reduced due to an obstacle in the communication path, any ongoing printing operation is cancelled and the printing success rate is lowered.

It is an object of the present invention to provide a wireless image forming apparatus that is capable of performing with an improved printing success rate and a method for operating said wireless image forming apparatus.

According to a first aspect of the invention, an image forming apparatus comprises a wireless receiver means for receiving print data, the receiver being configured to terminate a current data reception process in the event that an interrupted reception time out period expires, characterised in that the wireless receiver means is configured to set said time out period in dependence on the quality of a currently received print data signal.

The quality of the currently received print data signal may be assessed on the basis of one or more of the following parameters: signal strength; signal-to-noise ratio or bit error rate (BER).

Preferably, the receiver comprises means for determining the quality of the currently received data signal, and is configured to make repeated quality determinations during the data reception process and update said time out period in response to changes in said quality. For example, the receiver may be configured to respond to a decrease in the quality of the currently received print data signal by increasing said time out period.

According to a second aspect of the invention, a printing method comprises receiving print data via a wireless connection and is characterised by setting an interrupted reception time out period in dependence on the quality of a currently received print data signal.

According to a third aspect of the present invention, a wireless image forming apparatus has a wireless communication unit to receive image data transmitted from an external apparatus, demodulate the received image data and output the demodulated image data, and to output reception sensitivity information corresponding to a result of a measurement of wireless reception sensitivity for image data; and an image forming unit to set a time-out value based on the reception sensitivity information, and to stop reception of data from the external apparatus when data is not received for a time period exceeding the time-out value, while the data is being transmitted from the external apparatus.

Preferably, the wireless communication unit comprises: a wireless communication module to wirelessly receive the image data and demodulate the data, and to detect the wireless reception sensitivity of the image data and output the reception sensitivity information based on the detected wireless reception sensitivity; a storage unit to output the demodulated data after temporarily storing the data, and to store a control program for detecting the wireless reception sensitivity; and a CPU to control the communication of the data and the detection of the wireless reception sensitivity operated at the wireless communication module by loading the control program from the storage unit, and to output the reception sensitivity information input from the wireless communication module.

The wireless communication module may generate the reception sensitivity information by repeatedly checking the wireless reception sensitivity of the image data over a predetermined time interval in accordance with a control signal of the CPU while the image data is being transmitted.

The wireless image forming apparatus may further comprise an input/output interface unit to convey the demodulated image data and the detected reception sensitivity information to the image forming unit, to receive from the image forming unit feedback information relating to a printing operation and to wirelessly transmit feedback information.

The image forming unit may comprise: a storage unit arranged to temporarily store time-out information corresponding to the reception sensitivity information input from the wireless communication unit and the demodulated image data, a controlling unit arranged to change the time-out value in accordance with the time-out information corresponding to the reception sensitivity information stored in the storage unit, and to stop data reception when no image data is received over a period of time that exceeds the time-out value, and a printing unit operable to print the image data based on a control signal of the controlling unit.

In such an image forming unit, the controlling unit may be configured to use the time-out information stored in the storage unit to determine a new time out value such that the new time-out value is inversely proportional to the wireless reception sensitivity.

The image forming apparatus may comprise an input/output interface unit to receive the image data and the reception sensitivity information from the wireless communication unit, and to output to the wireless communication unit the feedback information relating to the printing operation.

According to a fourth aspect of the invention, a wireless printing method includes the operations of: changing a time-out value in accordance with wireless reception sensitivity of a wirelessly transmitted image data; performing printing of the transmitted image data; and stopping reception of the image data when no image data is received over a period of time exceeding the time-out value.

The step of changing the time-out value preferably includes the operations of: detecting the wireless reception sensitivity of the transmitted image data for a predetermined time interval; reading time-out information corresponding to the detected wireless reception sensitivity; changing the time-out value in accordance with the read time-out information; and determining whether the reception and printing of the image data is complete.

The wireless printing method may further comprise the steps of: setting time-out information corresponding to the wireless reception sensitivity; and storing the set time-out information.

Additional aspects and advantages of the invention will be set forth in part in the description which follows and, in part, will be obvious from the description, or may be learned by practice of the invention.

These and/or other aspects and advantages of the invention will become apparent and more readily appreciated from the following description of the embodiments, with reference to the accompanying drawings, of which:
Figure 1 is a block diagram showing a structure of a printing system having a wireless image forming apparatus according to a first embodiment of the present invention;
Figure 2 is a block diagram of a wireless communication unit of the printing system of Figure 1;
Figure 3 is a block diagram of an image forming unit of the printing system of Figure 1; and
Figure 4 is a flow chart showing the operation of the wireless image forming apparatus of Figure 1.

Reference will now be made in detail to embodiments of the present invention, examples of which are illustrated in the accompanying drawings, wherein like reference numerals refer to the like elements throughout. The embodiments are described below to explain the present invention by referring to the figures.

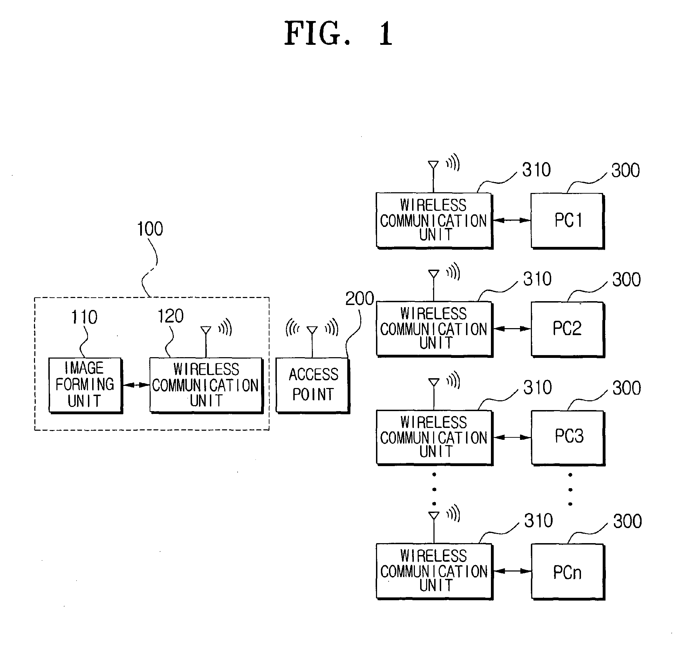

Figure 1 is a block diagram showing of a wireless printing system having a wireless image forming apparatus, according to a first embodiment of the present invention.

The wireless printing system comprises a plurality of terminals 300, such as PCs 1-n, each being connected to a wireless communication unit 310 and a wireless image forming apparatus 100 with a wireless communication unit 120 and an image forming unit 110. An access point 200 is arranged to relay image data from each of the wireless communication units 310 and 120.

Image data output from a PC 300 by an operator is input into the respective wireless communication unit 310. The wireless communication unit 310 modulates the image data output from the PC 300, and wirelessly transmit the modulated data to the image forming apparatus 100 via the access point 200.

The access point 200 receives modulated image data transmitted from the wireless communication unit 310. The image data is amplified before it is relayed to the image forming apparatus 100.

The wireless image forming apparatus 100 demodulates the modulated image data transmitted from the access point 200, and sequentially performs requested printing operations.

When a time out value is not specified for a particular requested printing operation, the wireless image forming apparatus 100 cancels the printing operation and performs a next requested printing operation, for example, a requested printing operation based on image data transmitted from another PC 300.

The wireless image forming apparatus 100 regularly determines a reception sensitivity for the image data while the data is transmitted from the access point 200 and selectively varies the time-out value according to the detected reception sensitivity.

The wireless image forming apparatus 100 transmits and receives image data via the wireless communication unit 120.The image forming unit 110 is arranged to print the image data as received.

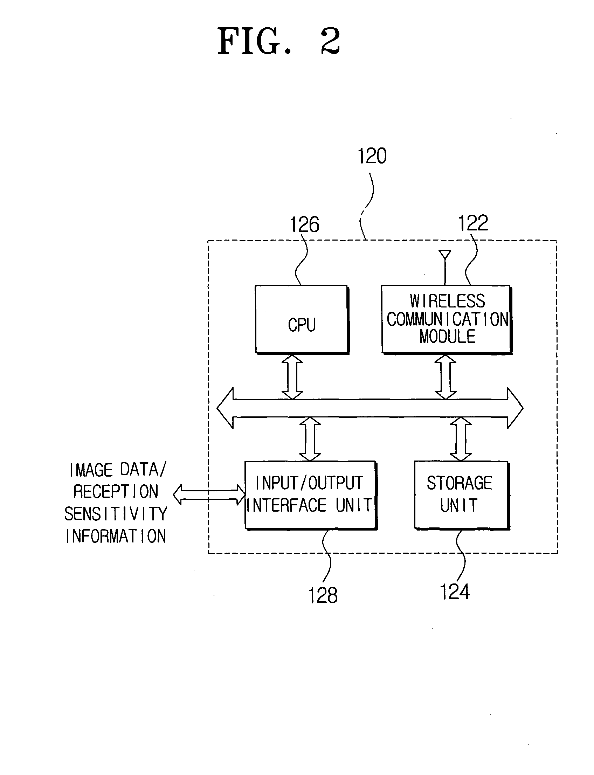

The operation of the wireless communication unit 120 will be described in greater detail with reference to Figure 2, which is a block diagram showing the structure of the wireless communication unit 120.

The wireless communication unit 120 comprises a wireless communication module 122, a storage unit 124, a CPU 126, and an input/output interface unit 128.

The wireless communication module 122 receives modulated image data transmitted from the access point 200, demodulates the modulated data, and then outputs the demodulated image data to the storage unit 124. In addition, the wireless communication module 122 regularly determines the reception sensitivity of the image data during its transmission from the access point 200, and outputs reception sensitivity information based on the detected reception sensitivity, e.g. received signal quality, to the CPU 126, in response to a control signal from the CPU 126.

The storage unit 124 stores a control program for determining the reception sensitivity. In addition, the storage unit 124 temporarily stores the image data transmitted from the wireless communication module 122, and outputs the image data to the image forming unit 110 through the input/output interface unit 128 in response to a control signal from the CPU 126.

The CPU 126 controls the data communication and the detection of reception sensitivity detection performed by the wireless communication module 122 in accordance with the control program held in the storage unit 124. The CPU 126 sends the reception sensitivity information, received from the wireless communication module 122, to the image forming unit 110 through the input/output interface unit 128.

The input/output interface unit 128 outputs the image data received from the storage unit 124 to the image forming unit 110. Additionally, the input/output interface unit 128 outputs the reception sensitivity information received from the CPU 126 to the image forming unit 110. The input/output interface unit 128 also receives feedback information regarding the printing operation from the image forming unit 110, and conveys the feedback information to the wireless communication module 122 in response to control signals from the CPU 126.

The image forming unit 110 selectively continues and stops the reception of the image data based on the reception sensitivity information input from the wireless communication unit 120 and the current time out value.

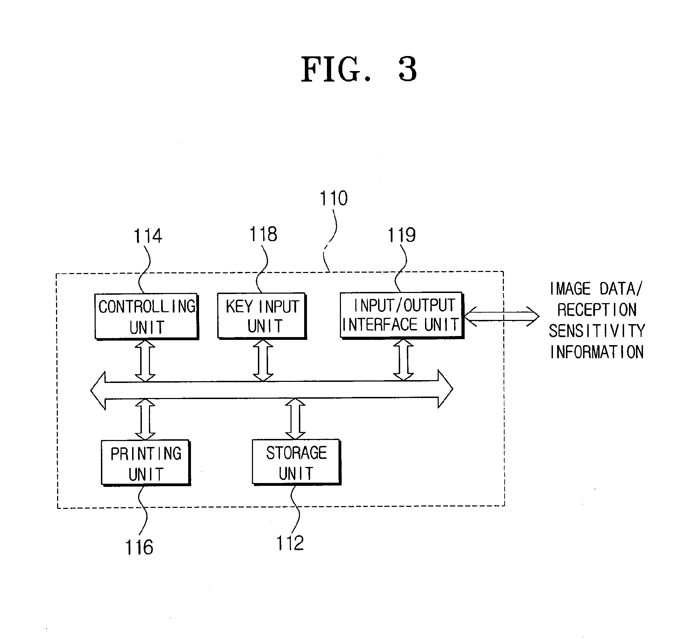

The operation of the image forming unit 110 will be described in greater detail with reference to Figure 3, which is a block diagram of the image forming unit 110.

As shown in Figure 3, the image forming unit 110 has a storage unit 112, a controlling unit 114, a printing unit 116, a key input unit 118, and an input/output interface unit 119.

The input/output interface unit 119 conveys the image data and the reception sensitivity information, received from the input/output interface unit 128 of the wireless communication unit 120, to the storage unit 112 and the controlling unit 114 in accordance control signals from the controlling unit 114. In addition, the input/output interface unit 119 conveys feedback information regarding the printing operation of the printing unit 116 to the wireless communication unit 120 in response to control signals from the controlling unit 114.

The storage unit 112 stores time-out information corresponding to the reception sensitivity information of the image data. In addition, the storage unit 112 temporarily stores the image data received from the wireless communication unit 120 and conveys it to the printing unit 116 in accordance with control signals from the controlling unit 114.

The controlling unit 114 receives the reception sensitivity information for the image data from the wireless communication unit 120 via the input/output interface unit 119, and reads the time-out information corresponding to the reception sensitivity information from the storage unit 112. Furthermore, the controlling unit 114 selectively varies the current time-out value in accordance with the time-out and reception sensitivity information stored by the storage unit 112, and stops the reception of the data when the wireless communication unit 120 does not receive image data transmitted from the access point 200 for a period that exceeds the current time-out value.

That is, the controlling unit 114 controls and processes the printing of image data from the plurality of PCs 300 as a sequence of printing operations and when, during the transmission of the image data from one of the plurality of PCs 300, the wireless communication unit 120 does not receive the image data for a period that exceeds the current time-out value, the controlling unit 114 stops the data reception and begins the next printing operation in the sequence.

In this particular embodiment, the controlling unit 114 controls the printing unit 116 to perform the printing operation with respect to the image data transmitted before data reception was stopped. However, in other embodiments of the invention, the printing unit 116 is controlled by the controlling unit 114 so that the image data transmitted before the time-out condition was met is not printed..

The printing unit 116 performs the printing of the image data input from the storage unit 112 in accordance with control signals from the controlling unit 114.

The key input unit 118 has keys for inputting various commands, including power-on etc., and conveys various commands to the controlling unit 114.

In this particular embodiment, the time-out value is set so that it is inversely proportional to the determined reception sensitivity. Table 1 is an example scheme of time-out values that may be set in response to various determined values of reception sensitivity.

**Table 1**

| Reception sensitivity information (%) | Time-out (sec) |
|---|---|
| 100 ~ 70 | 3 |
| 69 ~ 60 | 5 |
| 59 ~ 55 | 8 |
| 54 ~ 50 | 10 |
| 49 ~ 45 | 15 |
| 44 ~ 0 | 300 |

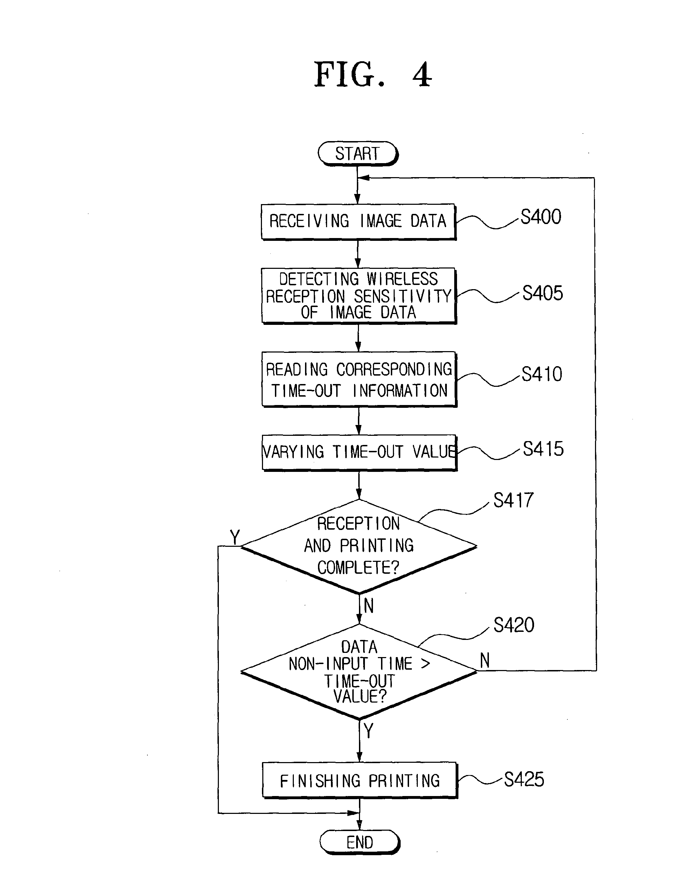

Figure 4 is a flow chart showing a method of operation of the wireless image forming apparatus of Figure 1.

In operation S400, the wireless communication module 122 of the wireless communication unit 120 receives modulated image data from the access point 200, and demodulates the modulated data. Then, the demodulated data is temporarily stored in the storage unit 124, and output to the image forming unit 110.

The wireless communication module 122 regularly determines the reception sensitivity of the image data transmitted from the access point 200 (operation S405), and sends reception sensitivity information based on the detected reception sensitivity to the image forming unit 110 in response to control signals from the CPU 126.

In operation S410, the controlling unit 114 of the image forming unit 110 reads time-out information, which corresponds to the reception sensitivity of the image data input from the wireless communication unit 120 from the storage unit 112. The controlling unit 114 then changes the time-out value in accordance with the read time-out information and the reception sensitivity information (operation S415).

In operation S417, the controlling unit 114 determines whether the reception and printing of the image data is complete. If not, then in operation S420, the controlling unit 114 determines whether a time period that has elapsed since the wireless communication unit 120 last received image data exceeds the time-out value. If so, operation S425 is performed as follows.

In operation S425, once the controlling unit 114 determines the time-out value has been exceeded (operation S420), the controlling unit 114 stops the reception of the data and cancels the printing operation by sending a control signal to the printing unit 116.

In one embodiment of the inventive method, the controlling unit 114 causes the printing unit 116 to print the image data that was received by the wireless communication module 122 before the time-out value was exceeded. Alternatively, in another embodiment, the controlling unit 114 may control the printing unit 116 so that the image data received before the time-out value was exceeded is not printed.

If the controlling unit 114 determines that the time-out value has not been exceeded (operation S420), the controlling unit 114 continues to receive image data, (operation S400) and to detect the reception sensitivity (operation S405) etc.

If, in operation S417, the controlling unit 114 then determines that the reception and printing of the image data is completed, the controlling unit 114 ends the process (operation S425).

In this manner, the success rate of the printing system may be increased with respect to prior printing systems, even when the reception sensitivity of data is variable.

Although a few embodiments of the present invention have been shown and described, it would be appreciated by those skilled in the art that changes may be made in this embodiment without departing from the principles of the invention, the scope of which is defined in the claims and their equivalents.

## Claims

1. An image forming apparatus comprising a wireless receiver means for receiving print data, the receiver being configured to terminate a current data reception process in the event that an interrupted reception time out period expires, **characterised in that** the wireless receiver means is configured to set said time out period in dependence on the quality of a currently received print data signal.

2. An image forming apparatus according to claim 1, comprising means for determining the quality of the currently received data signal, configured to make repeated quality determinations during the data reception process and to update said time out period in response to changes in said quality.

3. An image forming apparatus according to claim 2, wherein:
the receiver is configured to respond to a decrease in the quality of the currently received print data signal by increasing said time out period.

4. A printing method comprising: receiving print data via a wireless connection, **characterised by** setting an interrupted reception time out period in dependence on the quality of a currently received print data signal.

5. A method according to claim 4, further comprising making repeated determinations of the quality of the currently received data signal during the data reception process and updating said time out period in response to changes in said quality.

6. A method according to claim 5, wherein the time out period is increased in response to a decrease in the quality of the currently received print data signal.

7. A wireless image forming apparatus to wirelessly transmit and receive data with an external apparatus, comprising:
a wireless communication unit to
receive image data transmitted from the external apparatus, demodulate the received image data, output the demodulated image data,
detect a wireless reception sensitivity of the image data, and
output a reception sensitivity information corresponding to a result of detection; and
an image forming unit to change a time-out value based on the reception sensitivity information, and stop the reception of a data from the external apparatus as a time-out when a period of non-reception of the data exceeds the time-out value during the transmission of the image data from the external apparatus.

8. The wireless image forming apparatus of claim 7, wherein the wireless communication unit comprises:
a wireless communication module to
wirelessly receive the image data and demodulate the data,
detect the wireless reception sensitivity of the image data, and output the reception sensitivity information based on the detected wireless reception sensitivity;
a storage unit to temporarily store the demodulated image data and output the stored data, the storage unit storing a control program to detect the wireless reception sensitivity; and
a central processing unit to
control the communication of the data and the detection of the wireless reception sensitivity of the wireless communication module by loading the control program from the storage unit, and
output the reception sensitivity information input from the wireless communication module.

9. The wireless image forming apparatus of claim 8, wherein:
the wireless communication module outputs the reception sensitivity information by repeatedly checking the wireless reception sensitivity of the image data for a predetermined temporal interval in accordance with a control signal of the central processing unit while the image data is being transmitted.

10. The wireless image forming apparatus of claim 8, further comprising:
an input/output interface unit to
convey the demodulated image data and the detected reception sensitivity information to the image forming unit, and
receive feedback information with respect to a printing operation from the image forming unit, and then wirelessly transmit the feedback information.

11. The wireless image forming apparatus of claim 7, wherein the image forming unit performs a printing operation with respect to the image data transmitted before the time-out.

12. The wireless image forming apparatus of claim 7, wherein the image forming unit does not perform a printing operation with respect to the image data transmitted before the time-out.

13. The wireless image forming apparatus of claim 7, wherein the image forming unit comprises:
a storage unit to temporarily store time-out information corresponding to the reception sensitivity information input from the wireless communication unit and
the demodulated image data;
a controlling unit to
change the time-out value in accordance with the time-out information corresponding to the reception sensitivity information stored in the storage unit, and
stop the data reception when the period of non-reception of the image data exceeds the time-out value; and
a printing unit to print the image data based on the control signal of the controlling unit.

14. The wireless image forming apparatus of claim 13, wherein:
the controlling unit uses the time-out information stored in the storage unit to determine the time out value such that the time-out value is in inverse proportion to the wireless reception sensitivity.

15. The wireless image forming apparatus of claim 13, wherein the image forming unit further comprises:
an input/output interface unit to receive the image data and the reception sensitivity information from the wireless communication unit, and to output the feedback information with respect to the printing operation to the wireless communication unit.

16. A wireless printing method comprising:
changing a time-out value in accordance with a wireless reception sensitivity of a wirelessly transmitted image data;
performing printing of the transmitted image data; and
stopping a reception of the image data when a period of non-reception of the image data exceeds the time-out value.

17. The wireless printing method of claim 16, wherein the changing the time-out value in accordance with the wireless reception sensitivity of the wirelessly transmitted image data comprises:
detecting the wireless reception sensitivity of the transmitted image data at predetermined temporal intervals;
reading time-out information corresponding to the detected wireless reception sensitivity;
varying the time-out value in accordance with the read time-out information; and
determining whether the reception and printing of the image data is complete.

18. The wireless printing method of claim 17 further comprising:
setting up the time-out information corresponding to the wireless reception sensitivity; and
storing the set time-out information.

19. The wireless printing method of claim 16, wherein the stopping the reception of the image data when the period of non-reception of the image data exceeds the time-out value further comprises:
printing with respect to the image data transmitted before the time-out.

20. The wireless printing method of claim 16, wherein the stopping the reception of the image data when the period of non-reception of the image data exceeds the time-out value further comprises:
not printing the image data transmitted before the time-out.

21. A wireless printing method comprising:
receiving image data;
detecting a wireless reception sensitivity of the image data;
selectively varying a time out value in accordance with the detected wireless reception sensitivity of the image data;
determining whether reception and printing of the image data are complete;
if reception and printing of the image data are not complete, determining whether a period of interruption of reception of the image data exceeds the varied time out value if the period of interruption of reception of the image data exceeds the varied time out value, completing printing and ending;
if the period of interruption of reception of the image data does not exceed the varied time out value, continuing to receive image data, detecting wireless reception sensitivity of the image data, and determining whether reception and printing of the image data are complete until one of the reception and printing of the image data are complete, and the period of interruption of reception of the image data exceeds the varied time out value; and
if reception and printing of the image data are complete, ending.

22. The method according to claim 21, wherein the completing printing comprises:
printing the image data received before the time out value was exceeded.

23. The method according to claim 21, wherein the completing printing comprises:
not printing the image data received before the time out value was exceeded.

24. A wireless image forming system, comprising:
a terminal to send a printing request comprising image data;
a first wireless communication unit to receive the printing request from the terminal, and wirelessly transmit the printing request;
a wireless image forming apparatus comprising
a second wireless communication unit to wirelessly receive the printing request and detect a wireless reception sensitivity of the printing request; and
an image forming unit, in communication with the second wireless communication unit, to form an image using the received printing request;
vary a time out value in accordance with the wireless reception sensitivity, and
stop reception of the printing request when a period of interruption of reception of the image data exceeds the varied time out value.

25. The system according to claim 24, further comprising:
an access point to relay the printing request from the first wireless communication unit to the second wireless communication unit.

26. The system according to claim 24, further comprising:
a plurality of terminals to send printing requests comprising image data; and
a plurality of first wireless communication units, each corresponding to one of the plurality of terminals, to receive printing requests from the respective terminals, and wirelessly transmit the printing requests,
wherein the second wireless communication unit wirelessly receives the printing requests from the plurality first wireless communication units, and processes the printing requests in consecutive order.
